# EUROPEAN PATENT APPLICATION

(11) **EP 1 724 734 A1**
(43) Date of publication of application: **22.11.2006**
(21) Application number: 06113702.2
(22) Date of filing: 09.05.2006
(51) Int. Cl.: G07F 17/32

(54) **Electronic device for conducting the management of prize competitions**

(30) Priority: 17.05.2005 IT VI20050148
(71) Applicant: Beghelli S.p.A., 40050 Monteveglio, Bologna (IT)
(72) Inventor: Beghelli, Gian Pietro, 40050 Monteveglio (Bologna) (IT)
(74) Representative: Zanardo, Giovanni

(57) **Abstract**

An electronic device for conducting prize competitions, comprising a fixed base (1), mounted with a modem (21), connected to the mains supply line and telephone network, as well as a removable part (2), equipped with rechargeable batteries, including a display (3), a keyboard (4) and an electronic label reader (5); by extracting the removable part (2) from the base (1), the customer is able to read the electronic labels associated with the respective products, by approaching the reader (5) to the labels, so that the electronic device (2) generates the displaying of a message on the display (3) containing information concerning the type of prize that has been won, or some benefit acquired by said customer.

## Description

The present invention relates to a device and electronic system for conducting prize competitions.

More in particular, the invention relates to a device and electronic system for conducting prize competitions, with information concerning the customer's winnings provided in real time.

At present the systems used for conducting prize competitions based on the random extraction of winning tickets, with which some prize may be associated based purely on chance, are almost all composed of printed paper on which the type and amount of the prize is printed, such as lotteries, scratch cards, etc.

In these games, the customer unwraps the ticket or scratches a metallized strip that hides the information concerning prize winning, so he can control the result. At the same time, there also exist electronic machines with videogames that provide winnings based on statistics.

Furthermore, the prize competitions associated with products on sale have the disadvantage that the customer must follow a procedure that normally involves sending the proof of purchase by post, said proof generally being composed of a small card or coupon applied to the product.

The customer is informed if he has won some prize and its amount, only at a later date after reception, and the ensuing processing of the proof of purchase by the Supplier.

The aim of the present invention is therefore to eliminate the aforesaid problems, and in particular, to create an electronic device for conducting prize competitions, which permits the customer to read the information concerning his win immediately.

Another aim of the invention is to create an electronic device for conducting prize competitions, with an excellent price/quality ratio and which is easy and practical to use.

These and other aims are achieved with an electronic device for conducting prize competitions, according to the appended claim 1.

Advantageously, this device, called "ContaSconto", and the associated electronic system comprise an automatic reader for electronic labels applied to products on sale, and an electronic circuit, necessary for processing information collected by said reader, in order to provide the customer with the information concerning the prize associated with the electronic label on the product, by reading the information immediately on opening the packet of the purchased product.

Further characteristics and advantages of an electronic device for conducting prize competitions, according to the present invention, will be made clearer from the following description, with reference to an embodiment provided as a preferred example, but by no means limiting, of the said invention, and from the appended drawings wherein:
- Figure 1 shows an overall perspective view of the electronic device for conducting prize competitions, according to the present invention;
- Figure 2 shows a first side view of a mobile part of the electronic device for conducting prize competitions, according to the invention;
- Figure 3 shows a second side view of a mobile part of the electronic device for conducting prize competitions, according to the invention;
- Figure 4 shows a circuit block diagram of the mobile part of the electronic device for conducting prize competitions, according to the invention;
- Figure 5 shows a circuit block diagram of the fixed portion of the electronic device for conducting prize competitions, according to the present invention;
- Figure 6 shows a radio frequency electronic label (RFID) that can be read by the electronic device for conducting prize competitions, according to the present invention, and contained inside the packaging of the products on sale;
- Figure 7 shows an electronic system for conducting prize competitions, which uses a control device according to the invention.

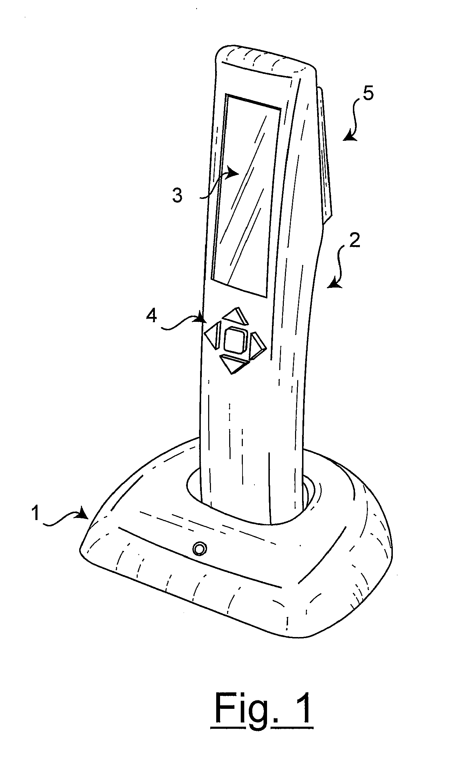

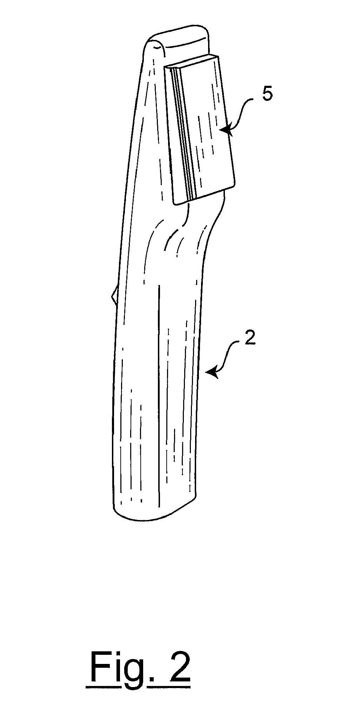

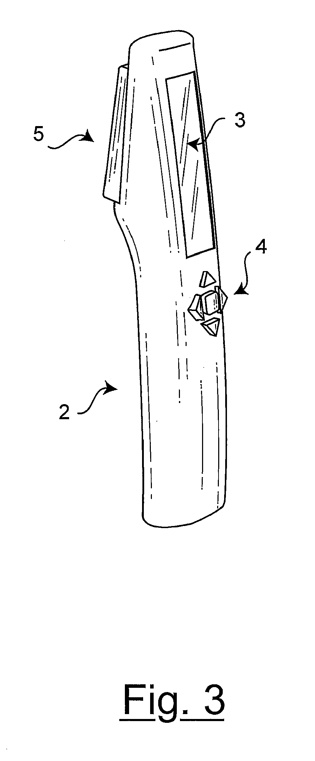

In particular reference to figures 1, 2 and 3, the electronic device for conducting prize competitions comprises a fixed base 1, containing a modem 21, connected to the mains power supply line and the telephone network, and a mobile or removable part 2, equipped with rechargeable batteries, including a screen or liquid crystal display (LCD) 3, a keyboard 4 and an electronic label reader 5.

When not in use, the mobile part 2 of the electronic device according to the invention is inserted inside the base 1, so it is connected to the supply and is able to recharge the internal batteries by means of a connector, and able to connect up with the modem for communication through the phone line.

When the customer extracts the mobile part 2 from the base 1, it can be used to read the electronic labels, by placing the reader 5 on the label.

Each time the customer places the reader 5 close to a label, the electronic device 1, 2 shows a message on the display 3 with information concerning the type of prize or advantage acquired by customer; for example, the customer may have won one of the special prizes at stake, associated with that particular label, or more simply, the customer may have won a discount or credit voucher on future purchases.

In all these cases, the display 3 will show a message of the following type:
"Product xyzt; has won a K° prize!", or
"Product xyzt; your discount has been increased by X euro; your total credit is Y euro!".

In this manner, the customer is always able to view his personal jackpot or prize situation in real time.

Validation of the win is performed automatically as soon as the customer inserts the mobile portion 2 of the electronic device according to the invention in the base 1; in this case, when the removable portion 2 is connected with the modem included in the base 1, it is placed in communication with the Supplier's computer system and transmits the data concerning the win.

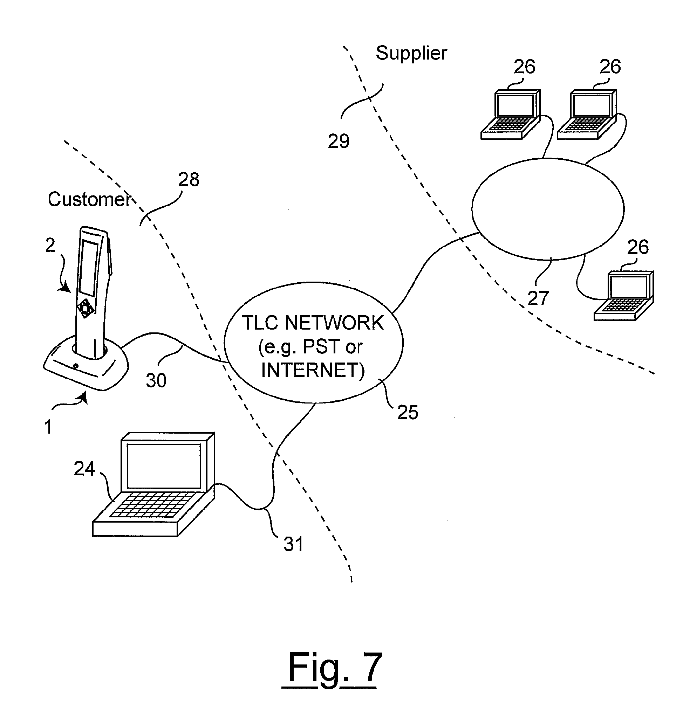

As shown in particular in figure 7, which illustrates the architecture of the prize competition organising system, the electronic device, object of the invention, positioned at the customer's location 28, is connected to a telecommunications network 25, through a cable 30; said telecommunications network 25 can be composed, for example, of a dial-up PSTN phone network, or an Internet network or a VPN network, or a wireless telecommunications network.

The electronic control device uses the connection to the network 25 for exchanging data with the computer system of the Supplier who has organised the prize competition, set up at the Supplier location 29; in particular, the computer system of the Supplier 29 is composed of a network of computers 26, 27, that store the information concerning the prize competition, such as the association between the electronic labels and the prizes, and the participation method used for the competition, for example.

Lastly, the customer 28 can possess a personal computer 24, also connected to the telecommunications network 25, through a cable 31, for example, through an appropriate modem incorporated in the personal computer 24, and connected to the computer system 26, 27 of the Supplier 29.

The functions possible thanks to this architecture are as follows:
- immediate transmission of the data concerning the labels read by the electronic device at the customer end 28 of the computer system 26, 27 of the Supplier 29 in order to validate the latest winnings by the customer and the updating of his total point count in the prize competition;
- possibility of updating the methods used for conducting the prize competition in real time.

In the case of the latter, the Supplier 29 is able to make any changes in the competition methods effective in real time, by introducing new products on the market, and associating different prize competition conditions, or defining special time intervals during which the method for assigning discount credits may be different from the conditions established at the beginning of the competition.

Updating is performed automatically each time the electronic device 1, 2 of the customer 28 is connected to the computer system 26, 27 of the Supplier 29; the computer system downloads into the electronic device 1, 2 of the customer 28 any updates relating to the competition, which are then stored in the electronic device memory.

Further functions of the device according to the invention are as follows:
- possibility of viewing certain messages on the display 3 in relation to advertising campaigns by the Supplier 29;
- possibility for the customer 28 to link up with the computer system of the Supplier 29, through personal computer 24, and by means of a password, to access certain personalised pages of information updated in real time, concerning the customer's points total situation in the competition, and being able to view all the most important data immediately, such as prizes already won, discount credit, etc.

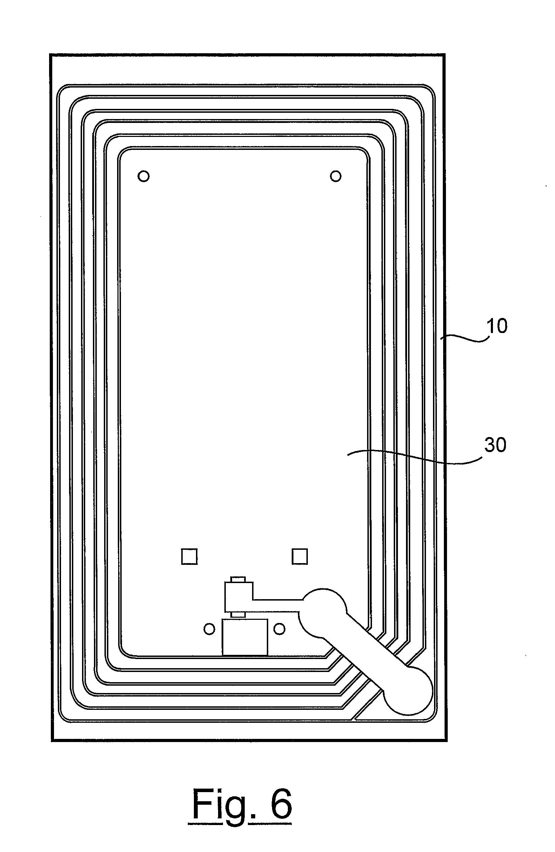

The RFID type radio frequency electronic label applied to the products, which the device according to the invention is able to read, is shown in detail in figure 6 and comprises a printed circuit antenna 10 with several loops, which connects with the magnetic field from which it receives its operating energy, and a silicon circuit 30 with an integrated processor, bi-directional communication interfacing, through magnetic field modulation, and a memory which contains a data area with an univocal code, assigned as a different code for each separate label, and a one time programming data area or OTP.

The label is activated when it is in contact with the high frequency magnetic field(for example:13,56 MHz); the field is modulated by the reader 5 incorporated in the mobile part 2 of the electronic device, in order to transfer the query information to the label, while keeping it magnetised at the same time.

Successively, the reader 5 of the removable portion 2 of the electronic device keeps the magnetic field applied and reads the response from the label, which occurs through the modulation of the magnetic field by the label.

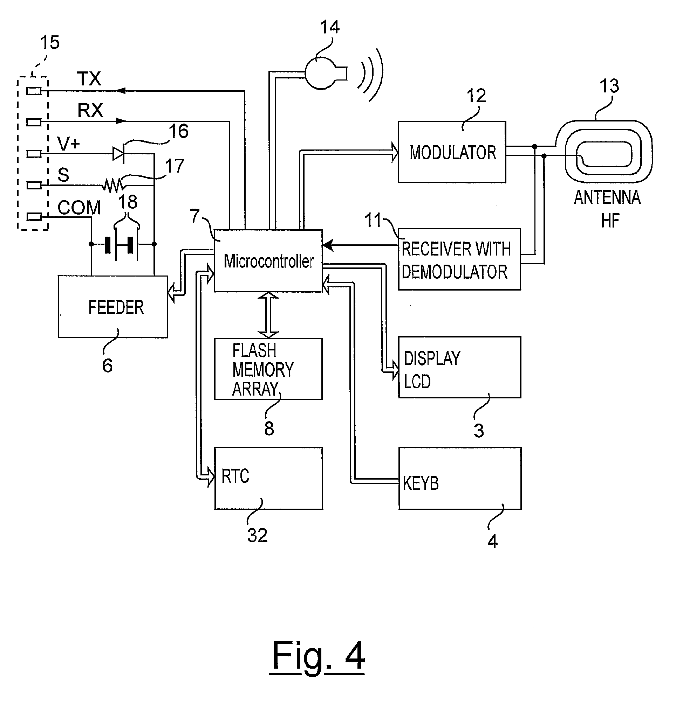

In particular reference to the appended figure 4, the removable part 2 of the electronic device object of the invention includes a micro-controller 7 at circuit level, which controls and monitors all operations, and a flash memory array 8 for data writing and reading, of the type designed to preserve data during power failure to the supply line, and with a size that is large enough to contain a whole data base relative to a prize competition organised in records.

The aforesaid records contain at least the following information:
- for each possibile purchased product, the discount value the customer can be credited;
- the list of the special prizes and the label codes associated with them;
- codes that can be identified by the reader 5;
- label codes previously read;
- winning label codes previously read.

The removable portion 2 of the electronic device also comprises:
- the liquid crystal display 3 (LCD) with backlighting, laid out in several lines of alphanumerical characters or dot matrix;
- the keyboard 4, composed of a number of function keys (at least four directional arrows and a confirm key) for use by the customer to access the various device menus;
- a warning buzzer 14 to signal every label reading or pressure on a keyboard key 4, or the winning of a special prize;
- a high frequency generator (HF), such as 13,56 MHz, with a modulator 12 for high frequency antenna 13 piloting, aimed at activating the emission of the magnetic field necessary for "energising" a RFID label of the type shown in figure 6 and for communicating query messages to the label from the reader 5;
- a receiver with a demodulator 11, necessary for the demodulation of response messages from the label, in the form of high frequency magnetic field modulation emitted by the reader 5 (the receiver 11 uses the same antenna 13 to capt modulated magnetic field from the label);
- a feeder 6, that generates the supply voltage necessary for operating the mobile portion 2 of the electronic device;
- at least one rechargeable battery 18, to supply the removable portion 2, when it is disconnected from the base;
- a recharging system, for example composed of circuit components 16 (diode) and 17 (resistor), to charge the battery 18 in complete safety when the portion 2 is inserted in the fixed part or base 1;
- a low consumption "real time clock" 32, incorporating an astronomical clock, mounted with its own 32.768 KHz clock quartz;
- a connector 15 for connection to base 1.

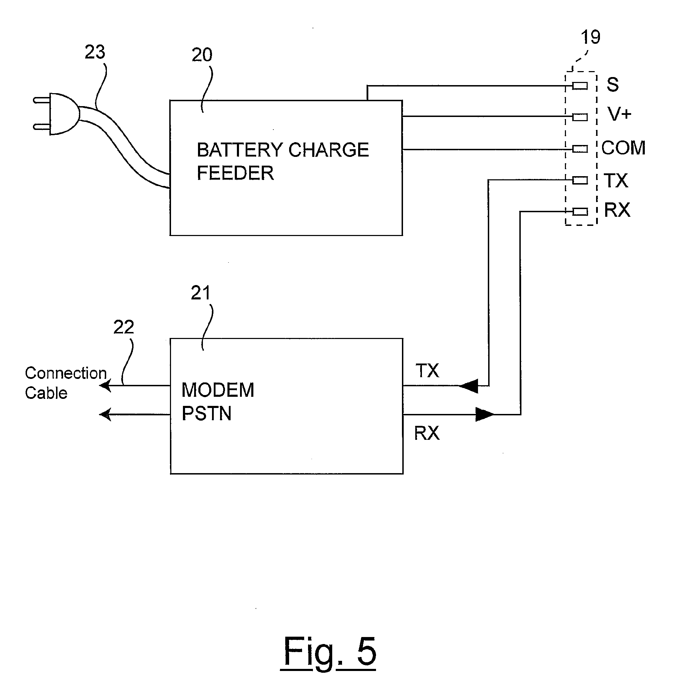

In particular reference to figure 5, the fixed portion or base 1 of the electronic device according to the invention comprises:
- a connector 19 for connection to the mobile part 2;
- a battery-charger feeder 20, that provides the power voltage for the modem 21, incorporated inside the base 1, and the suitable voltages necessary on terminals S, V+ and COM to feed / charge the mobile part 2;
- a modem 21 for connection to the telephone line or, more generally, to the telecommunications network 25;
- a connection 23 to the mains power supply line;
- a connection cable 22 to the telecommunications network 25.

The operating mode of the electronic device for conducting prize competitions, according to the present invention, is basically as follows.

The micro-controller 7 is normally set in "idle" state, and in this condition it pilots the display 3 showing a user invitation message such as "label reader ready, press a key for reading".

In these conditions, the energy consumption of the battery is reduced to the minimum, and the micro-controller 7 limits its action to scan the keyboard 4 and to monitor the connection with modem 21 on a regular basis.

When a key on keyboard 4 is pressed, the microcontroller 7 activates the generator/modulator 12, and emits a magnetic field from the antenna 13, periodically sending a label reading message.

Therefore, if the reader 5 is in the proximity of an RFID label such as the type shown in figure 6 (for example in a range of action of a few centimetres from reader 5, where antenna 13 is located), the label will respond with a data sequence, which is read by the microcontroller 7, through the receiver/ demodulator 11.

The response from the scanned label supplies the microcontroller 7 with the label serial code and all the memory cells of the label which contain information relevant to the prize competition, such as the type of product associated with the RFID label and/or a possible special prize associated with the RFID label.

At this point, the electronic control device according to the invention, having recognised the label and read the relevant data fields, communicates the results of the operation to the customer, by displaying the results on the LCD 3; in addition, the device completes the operation by writing a specific label memory cell, so that the label is cancelled to prevent any successive re-reading operations of that particular label, and to also prevent any successive crediting by the customer, using the same label, or successive readings by other customers who by accident or by fraud have come into possession of the same label at a later time.

In order to make the operation traceable, the electronic device writes the code of the device used to read the label in a writeable memory cell (One Time Programming) of the label.

At the same time, the device stores the relevant data read from the label in its own flash memory 8, in particular the serial code of the read label which is stored in memory 8 until it is sent to the customer computer system 29, through modem 21 and the telecommunications network 25.

Moreover, the data concerning any special prizes that may have been won are also stored in the memory 8.

The customer may use the keys of the keyboard 4 to "navigate" in the device menu and to display locally any information of interest; the microcontroller 7 scans the memory 8 and shows the requested information on the display 10, in particular the total discount (credit) accumulated by the customer, which can be viewed in real value in currency or as a percentage of the customer's monthly or annual turnover, the list of special prizes won by the customer, the list of messages relating to promotion events associated with prize competitions, and device sub-menu configuration.

When the mobile part 2 is inserted in the base 1, the microcontroller 7 is connected to the modem 21 and the battery 18 is connected to the feeder/charger 20; in this condition, the battery 18 is charged through the diode 16 and the measuring resistor 17 (the diode 16 is needed to protect the connector 15 of the removable portion 2 in the case of accidental short-circuiting).

The microcontroller 7, connected to the modem 21, is able to communicate through the telecommunications network 25, when portion 2 is inserted in base 1.

In this way, the microcontroller 7 can generate the calls on the telecommunications network 25 and link up to the computer system 26, 27 of the Supplier 29 to send the data concerning the read labels and to receive the data concerning new prizes and updating of competition organisation methods.

In particular, the electronic device 1, 2 communicates periodically (once a week for example) with the computer system 26, 27 of the Supplier 29, preferably during the night so as not to keep the customer's phone line busy.

The microcontroller 7 uses the time set on the "real time clock" 32 to activate the periodic calls through the modem 21.

It is also possible for the electronic device 1, 2 to be called by the Supplier's information unit 29 for updating.

In this manner, communication time is negligible since the phone calls last only a few minutes each week, with very little effect on the management costs, with the result that it does not increase the cost of prize competition organisation.

The microcontroller 7 is able to warn the customer of any event using an acoustic signal 14, that is directly commanded to generate various types of distinctive sounds according to the associated event (for example, pressing a key, winning a prize, reception of updated data, etc.)

A further function of the electronic device according to the invention is to advertise, informing the customer 28 of possible new sales operations set up by the Supplier 29.

In fact, each time the device 1, 2 is connected to the information unit 26, 27 of the Supplier 29, it is able to receive information and show it on the display 3.

Therefore the customer will find an indication on the display 3, such as a flashing sign to inform him of news of a new advertising promotion concerning some particular product sold by the Supplier, such as:
"Sales promotion for product xyzt; 10% discount on purchases during the period from 1-1-2007 to 31-1-2007".

In particular, the microcontroller 7 controls the feeder 6 and all the function blocks connected with it, to minimise power consumption all the time, and to maximise battery autonomy 18; in particular, when the removable portion of the electronic device is disconnected from the base 1 and there are no labels to be read for a maximum pre-established time such as 30 seconds for example, the block generator/modulator 12 and receiver/demodulator 11 are switched off, reducing consumption.

As soon as the customer presses a key again, the reader 5 of portion 2 is reactivated.

Lastly, the display 3 is also organised to optimise power consumption; in fact, the backlighting on the display 3 lights up only when the reader 5 is activated, and it switches off again when the reading or menu navigating activities in reader 5 are completed.

The technical characteristics of the electronic device for conducting prize competitions object of the present invention, have been made clear by the description above, as have the advantages to be obtained from the invention.

Naturally numerous other variants can be applied to the electronic device in question, while remaining within the context of the aforesaid inventive principles, and it is also clear that in the practical embodiment of the device, the materials, form and details described herein can be of any type according to necessary requirements.

## Claims

1. Electronic device for conducting prize competitions, comprising a fixed base (1), connected to a supply line and to the telephone network, and at least one removable portion (2), equipped with rechargeable batteries, **characterised in that** said removable portion (2) includes at least one displaying device (3) and at least one reader (5) of electronic labels, in a manner so that, by extracting the said removable portion (2) from the base (1), it is possible to perform the coded reading of electronic labels, associated with respective products, by approaching said reader (5) close to each label, said reader (5) thus permitting viewing in real time on the displaying device (3) of at least one information message relative to a type of prize or acquired advantage.

2. Electronic device according to claim 1,
**characterised in that** said base (1) includes at least one modem (21), adapted to communicate with the computer system (26, 27) of a Supplier (29), which sends the data concerning the win.

3. Electronic device according to claim 2,
**characterised in that** it is positioned in a customer (28) location, and is connected to a telecommunications network (25), such as a dial-up PSTN telephone line or an Internet network, or a VPN network, or a wireless telecommunications network, in order to exchange data with said computer system (26, 27) of the Supplier (29), which stores the information concerning prize competitions, such as the association between the electronic labels, the prizes and the methods for participating in the competitions, automatic competition updating, and the total point count of the user.

4. Electronic device according to claim 3,
**characterised in that** the customer (28) possesses at least one computer (24), connected to the telecommunications network (25) and to the computer system (26, 27) of the Supplier (29).

5. Electronic device according to claim 1,
**characterised in that** said electronic label applied on the product is of the RFID or radio frequency type and comprises at least one printed circuit antenna (10) with several loops, which connects with a magnetic field from which it receives operating energy, and an electronic circuit (30) incorporating a processor, a bi-directional communication interface, and a memory containing at least a first data area with univocal code and at least a second data area of the Read-only type.

6. Electronic device according to claim 1,
**characterised in that** said removable portion (2) includes a microcontroller (7), that manages the operating function, at least one memory element (8) for writing, reading and storing data relative to prize competitions.

7. Electronic device according to claim 1,
**characterised in that** said removable portion (2) includes at least one keyboard (4), comprising a set of function keys and at least one confirm key, and at least one acoustic signalling device (14) for the emission of a signal with each label reading, or each time a key is pressed on the keyboard (4) or in the case of the winning of a special prize.

8. Electronic device according to claim 1,
**characterised in that** said reader (5) includes at least one high frequency generator, with a modulator (12), to pilot the antenna in high frequency (13), adapted to emit the necessary magnetic field to feed said electronic label, at least once receiver, with demodulator (11), to demodulate response messages from the label, in the form of magnetic field modulation emitted by the reader (5), a feeder (6), at least one rechargeable battery (18), a battery recharging system (18) and at least one time-measuring device (32), incorporating an astronomical clock, equipped with its own clock quartz.

9. Electronic device according to claim 2,
**characterised in that** said base (1) comprises at least one connector (19), for connection to the mobile portion (2), and a recharging system (20), connected to the supply line, that provides the power supply to said modem (21) connected to the telecommunications network (25).

10. Electronic device according to claim 6,
**characterised in that**, upon the removable portion (2) being connected to the base (1), the microcontroller (7) is connected to the modem (21) and communicates through the telecommunications network (25), to generate periodic calls to send the Supplier (29) the data concerning the read labels and to receive the data concerning competition organisation.
